# EUROPEAN PATENT APPLICATION

(11) **EP 4 814 550 A1**
(43) Date of publication of application: **30.09.2026**
(21) Application number: 25883983.6
(22) Date of filing: 08.05.2025
(51) Int. Cl.: G02B 6/02, G02B 6/032

(54) **HOLLOW-CORE ANTI-RESONANT OPTICAL FIBER WITH HIGH SINGLE-MODE PERFORMANCE AND LOW LOSS**

(30) Priority: 01.11.2024 CN 202411548340
(71) Applicant: Yangtze Optical Fibre and Cable Joint Stock Limited Company, East Lake High-tech Development Zone Wuhan Hubei 430073 (CN)
(72) Inventor: JIA, Anqing, Wuhan, Hubei 430073 (CN); CHEN, Guoqun, Wuhan, Hubei 430073 (CN); LI, Peng, Wuhan, Hubei 430073 (CN); DING, Yuxin, Wuhan, Hubei 430073 (CN); ZHANG, Lei, Wuhan, Hubei 430073 (CN); LUO, Jie, Wuhan, Hubei 430073 (CN)
(74) Representative: Lorenz Seidler Gossel Part. mbB
(86) International application number: PCT/CN2025/093292
(87) International publication number: WO 2026/091453

(57) **Abstract**

The present disclosure relates to a hollow-core anti-resonant optical fiber with high single-mode performance and low loss, including an outer cladding and an inner cladding which is formed by nested structural elements arranged circumferentially along an inner wall of the outer cladding and connected to the inner wall of the outer cladding and wraps a central cavity to form a fiber core, wherein the nested structural element includes 2 layers of nested glass tubes having different radii, i.e., including an outer nested glass tube and an inner nested glass tube, and at least one inner nested glass tube is deflected to one side relative to the outer nested glass tube in which the inner nested glass tube is located, a deflection angle being 5° to 55°. The present disclosure changes a cladding structure and has a rational and fabricable shape of nested structural elements, an optimized combination of nesting dimensions, and a deflection of the inner nested glass tube, which significantly enhances the leakage loss of the LP11 mode, has little impact on the performance of the fundamental mode, and finally effectively improves the single-mode performance of the optical fiber.

## Description

### Field of the Invention

The present disclosure relates to the technical field of hollow-core optical fibers, and in particular, to a hollow-core anti-resonant optical fiber with high single-mode performance and low loss, which belongs to the technical field of optical communication and transmission.

### Background of the Invention

A hollow-core anti-resonant optical fiber has a unique microstructure design, can confine transmitted optical waves in an air fiber core, and has important applications in fields such as light-matter interaction, nonlinear optics, gas detection, gas laser generation, and optofluidics. Due to its unique structure and light guidance mechanism, the hollow-core anti-resonant optical fiber can obtain ultra-low Rayleigh scattering, a low nonlinear coefficient, and tunable chromatic dispersion, offering a higher laser-induced damage threshold, so that it is potentially applied in high-power laser transmission, ultraviolet/mid-infrared light transmission, pulse compression, and optical soliton transmission. The air core has an ultra-low loss, low chromatic dispersion, low nonlinearity, and a propagation speed close to the speed of light, and can realize the transmission of hollow-core optical fiber communication and the development of devices for communication, thereby laying a foundation for the construction and development of the next-generation ultra-high-capacity, low-latency, high-speed optical communication systems.

Even though the hollow-core optical fiber has a unique and great advantage in design and application, since it inherently lacks a higher-order mode cutoff condition, a higher-order mode in the hollow-core optical fiber cannot be effectively filtered out in the same way as in a solid-core single-mode optical fiber. This will significantly limit its application in short-reach transmission scenarios. Recent studies show that, the leakage loss of the higher-order mode can be enhanced to a certain extent by a reasonable structural design, thereby achieving an effect similar to an effect produced by a single mode after transmission over a certain distance.

A current commonly used approach for filtering out the higher-order mode is to select a cladding mode with a high attenuation, and the cladding mode is highly phase-matched with an LP11 mode in the fiber core by a structural design, thereby effectively enhancing the leakage loss of the LP11 mode. Key factors in this design approach are the intrinsic attenuation of the cladding mode and the degree of phase matching between the cladding mode and the LP11 mode. Generally, the higher the attenuation of the cladding mode and the higher the degree of phase-matching between the cladding mode and the LP11 mode are, the greater the enhancement to the leakage of the LP11 mode, and the better the single-mode performance.

A US patent US11733451B2 discloses a single-ring hollow-core anti-resonant optical fiber. This patent proposes using a high-loss anti-resonant element (ARE) mode to highly phase-match with the LP11 mode in the fiber core. This structure is very simple, is easy to fabricate via fiber drawing, and can achieve an ultra-high higher-order mode suppression ratio. When a dimension ratio of a cladding tube to a fiber core is 0.68, a broadband high single-mode performance can be achieved, and the attenuation of the LP11 mode can reach the magnitude of 10² dB/m. However, this structure struggles to achieve transmission with an ultra-low attenuation, currently has a lowest attenuation of 4.3 dB/km (1080 nm) in the near-infrared band and an even higher attenuation in the communication band and has a poor bending resistance, and thus has limited advantages for many applications in the near-infrared band.

A Chinese patent CN110515152B discloses a hollow-core nested anti-resonant nodeless fiber (NANF) and a hollow-core double nested anti-resonant nodeless fiber (DNANF). These two structures effectively reduce the transmission loss of a fundamental mode by increasing the number of anti-resonant layers. With respect to the NANF, its lowest attenuation has reached 0.22 dB/km, and the DNANF has even broken the minimum attenuation record of the conventional solid-core fiber, reaching 0.11 dB/km. However, the above two optical fibers also keep the loss of the LP11 mode at a relatively low level while achieving an ultra-low attenuation. When the NANF structure achieves an optimal resonant leakage design in the LP11 mode, the theoretical LP11 attenuation is at the magnitude of about 10² to 10³ dB/km, and under actual fabrication and placement conditions, the current highest attenuation can reach 2.6 dB/m. The intrinsic attenuation of its cladding mode has been significantly reduced as the number of structural layers increases, so the attenuation of the LP11 mode cannot reach a sufficiently high level. This situation is even more severe in the DNANF structure: first, the attenuation of the cladding mode is further reduced in the DNANF structure; second, the cladding region of DNANF structure no longer has sufficient space for the LP11 mode and cladding mode to achieve adequate phase matching, and the theoretical attenuation of the LP11 mode has been less than 10² dB/km, which means that the higher-order mode cannot be filtered out in the DNANF, thereby severely affecting the signal transmission quality.

### Summary of the Invention

The problem to be solved in the present disclosure is to provide a hollow-core anti-resonant optical fiber with high single-mode performance and low loss in view of the shortcomings existing in the prior art, which increases the loss of the higher-order mode by changing the structure of the cladding and achieves high-purity single-mode transmission.

In order to solve the above problem, the technical solution adopted in the present disclosure is as follows. The hollow-core anti-resonant optical fiber with high single-mode performance and low loss includes an outer cladding and an inner cladding, wherein the inner cladding is formed by nested structural elements arranged circumferentially along an inner wall of the outer cladding and connected to the inner wall of the outer cladding and wraps a central cavity to form a fiber core, wherein the nested structural element includes 2 layers of nested glass tubes having different radii, i.e., including an outer nested glass tube and an inner nested glass tube, and at least one inner nested glass tube is deflected to one side relative to the outer nested glass tube in which the inner nested glass tube is located, with a deflection angle being 5° to 55°.

According to the above solution, the inner nested glass tube being deflected to one side relative to the outer nested glass tube means that a deflection angle is formed between a connection line L2 of a curvature center of the inner nested glass tube and a curvature center of the outer nested glass tube and an extension line L1 of a line connecting the curvature center of the outer nested glass tube and a geometric center of the fiber core.

According to the above solution, the inner cladding includes 4 to 6 nested structural elements.

According to the above solution, the nested structural elements are arranged at an interval circumferentially and uniformly along the inner wall of the outer cladding.

According to the above solution, the outer cladding and the inner wall are both circular.

According to the above solution, the nested glass tubes include circular nested glass tubes having different radii, wherein respective circular nested glass tubes are tangent, and the outer nested glass tube is tangent to an inner cavity wall of the outer cladding.

According to the above solution, the nested glass tubes include circular-arc nested glass tubes having different radii and circular nested glass tubes having different radii, wherein respective circular-arc nested glass tubes intersect with an inner wall of the outer cladding, or respective circular nested glass tubes are tangent to the inner wall of the outer cladding.

According to the above solution, the nested glass tubes include circular-arc nested glass tubes having different radii, wherein respective circular-arc nested glass tubes intersect with an inner wall of the outer cladding.

According to the above solution, multiple inner nested glass tubes or all inner nested glass tubes are deflected to the same side relative to the outer nested glass tubes, and deflection angles are the same or substantially the same.

According to the above solution, some of the inner nested glass tubes are deflected to one side, and some of the inner nested glass tubes are deflected to the other side.

According to the above solution, the outer nested glass tubes are circular-arc nested glass tubes, and the inner nested glass tubes are circular nested glass tubes or circular-arc nested glass tubes.

According to the above solution, the deflection angle is from 15° to 45°; further, the deflection angle is from 25° to 40°; and furthermore, the deflection angle is from 30° to 40°.

According to the above solution, a base material of the outer cladding and a base material of the nested structural element are both pure silica glass.

According to the above solution, a wall thickness of the inner nested glass tube and a wall thickness of the outer nested glass tube are from 0.3 µm to 1.5 µm.

According to the above solution, a ratio of an outer diameter of the outer nested glass tube to an outer diameter of the inner nested glass tube is 1:0.35 to 0.6.

According to the above solution, a fiber core region and other cavity regions in the outer cladding are filled with a gas.

According to the above solution, the gas is argon, nitrogen, helium, air or a mixture of multiple gases.

According to the above solution, a loss of a fundamental mode of the optical fiber is from 0.4 dB/km to 2 dB/km; and further an attenuation value is less than 0.5 dB/km.

According to the above solution, a loss of a higher-order mode of the optical fiber is from 4 dB/km to 10 dB/km; and further an attenuation value is greater than 6 dB/m.

The present disclosure has the following beneficial effects. 1. In the structure of the present disclosure, the inner cladding includes multiple layers of anti-resonant silica walls and an air layer, and the transmitted fundamental mode is effectively confined in the fiber core, which restricts the reduction of the loss; and the present disclosure changes a cladding structure and has a rational and fabricable shape of nested structural elements, an optimized combination of nesting dimensions, and a deflection of the inner nested glass tube, which significantly enhances the leakage loss of the LP11 mode, has little impact on the performance of the fundamental mode, and finally effectively improves the single-mode performance of the optical fiber. The key point of the present disclosure lies in that, when the ratio of the outer diameter of the outer nested glass tube to the outer diameter of the inner nested glass tube is optimized to the best, the inner nested glass tube is deflected to one side in the outer nested glass tube, and this structure can enhance the leakage efficiency of the LP11 mode, thereby obtaining a higher single-mode performance. 2. The present disclosure designs phase-matching between a higher-order mode of the fiber core and a mode of the inner air region, designs increasing the loss of the cladding mode so as to enable more efficient leakage of the higher-order mode and further enhance the attenuation of the higher-order mode, and has an excellent single-mode transmission performance. 3. The single-mode performance of the present disclosure is not wavelength-selective, and high single-mode transmission can be achieved within an operating wavelength. The present disclosure provides a hollow-core optical fiber which gives consideration to both the attenuation and the single-mode characteristic, and provides a transmission medium with an excellent performance for fields such as high-speed communication, high-power transmission, gas laser, and gas detection.

### Brief Description of the Drawings

Fig. 1 is a structural diagram of a radial section in a first embodiment of the present disclosure.
Fig. 2 is a partial enlarged view of a nested tube in Fig. 1.
Fig. 3 is a structural diagram of a radial section in a second embodiment of the present disclosure.
Fig. 4 is a curve graph in which a loss of an LP11 mode changes with a deflection angle in the first embodiment of the present disclosure.
Fig. 5 is a curve graph in which the loss of the LP11 mode changes with a geometric dimension in the first embodiment of the present disclosure.
Fig. 6 is a curve graph in which a loss of a fundamental mode changes with a wavelength in the first embodiment of the present disclosure.
Fig. 7 is a structural diagram of a radial section in a third embodiment of the present disclosure.
Fig. 8 is a structural diagram of a radial section in a fourth embodiment of the present disclosure.

### Detailed Description of the Embodiments

The present embodiment is further described in detail below in conjunction with embodiments of the present disclosure and the accompanying drawings.

A commonly used approach for filtering out a higher-order mode in a hollow-core optical fiber is to select a cladding mode with a high attenuation, and the cladding mode is highly phase-matched with an LP11 mode in the fiber core by a structural design, thereby effectively enhancing the leakage loss of the LP11 mode. The attenuation of the LP11 mode achieved by this design approach may be estimated by the following formula: ${α}_{11}^{′} \left(dB/m\right) = \frac{20}{log \left(10\right)} ⋅ ℑ \left({β}_{11}^{′}\right) = \frac{20}{log \left(10\right)} ⋅ \frac{ℑ \left({β}_{ARE}-{β}_{11}\right) ⋅ {\left|K\right|}^{2}}{ℜ {\left({β}_{11}-{β}_{ARE}\right)}^{2}} .$

In the formula, $ℑ \left({β}_{11}^{′}\right)$ is an imaginary part of a propagation constant of the LP11 mode after the resonant filtering-out, and its value is directly proportional to the final loss ${α}_{11}^{′}$. 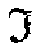 (*β_{ARE} - β*₁₁) is a difference value between an imaginary part of an intrinsic propagation constant of a cladding mode and an imaginary part of an intrinsic propagation constant of the LP11 mode, and represents a loss difference of the two modes in an initial state. K is a coupling coefficient of the two modes, and can be regarded as a constant here. 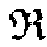 (*β*₁₁ - *β_{ARE}*) is a difference value between real parts of propagation constants of the two modes and represents a degree of phase-matching between the two modes, and the smaller the value, the higher the degree of phase-matching.

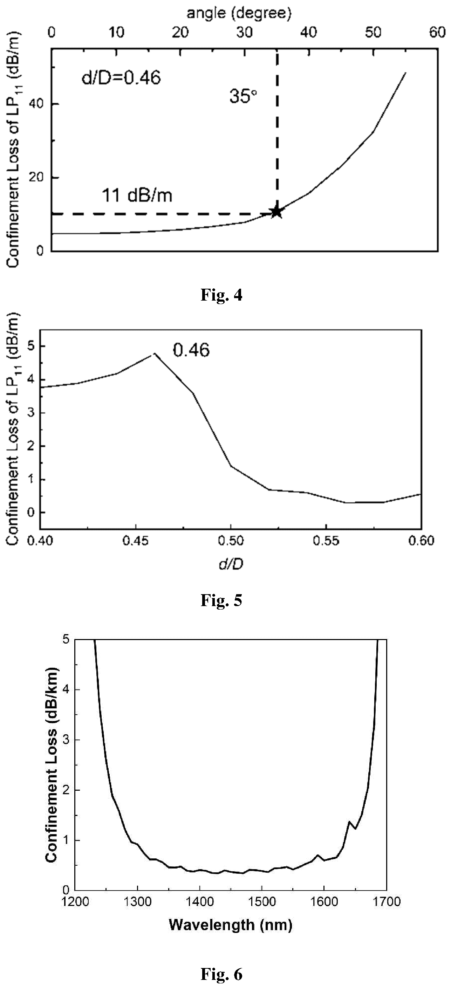

The above formula shows that, the attenuation of the designed LP11 mode depends on the intrinsic attenuation of the cladding mode and the degree of phase-matching between the cladding mode and the LP11 mode. Generally, the higher the attenuation of the cladding mode and the higher the degree of phase-matching between the cladding mode and the LP11 mode are, the greater the enhancement to the leakage of the LP11 mode, and the better the single-mode performance. By adjusting only the manner of phase-matching (as shown by a dash line in Fig. 4), the attenuation of the LP11 mode can at best reach the level achieved at the perfect matching point, i.e., a circular marker shown in Fig. 4. After reaching a perfect matching condition, the limitation can be broken through by rotating the glass tube of the cladding, thereby further enhancing the loss of the LP11 mode (as shown by a solid line in Fig. 4). At a star marker in Fig. 4, the attenuation of the LP11 mode may reach 11 dB/m.

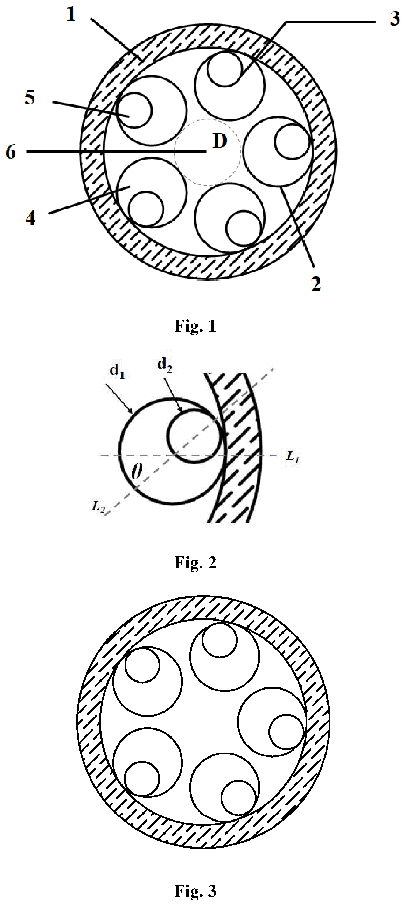

A first embodiment of the present disclosure is as shown in Fig. 1 and Fig. 2. An outer cladding 1 and an inner cladding are included. The inner cladding is formed by 5 nested structural elements, and the nested structural elements are arranged circumferentially along an inner wall of the outer cladding. The nested structural element includes 2 layers of nested glass tubes having different radii, i.e., including an outer nested glass tube 2 and an inner nested glass tube 3 which constitute an anti-resonant element. The nested glass tubes include 2 circular nested glass tubes having different radii. The outer nested glass tube has a diameter of d1, and the inner nested glass tube has a diameter of d2. The outer nested glass tube and the inner wall of the outer cladding are tangent, and the inner nested glass tube and the outer nested glass tube are tangent and are deflected to one side relative to a tangent point of the outer nested glass tube and the inner cavity wall of the outer cladding. That is, a deflection angle is formed between a connection line L2 of a curvature center (the circle center) of the inner nested glass tube and a curvature center (the circle center) of the outer nested glass tube and an extension line L1 of a line connecting the curvature center of the outer nested glass tube and a geometric center of the fiber core, and the deflection angle is 35°. Deflection directions of all inner nested glass tubes are consistent. A central cavity wrapped by the inner cladding forms a fiber core 6. A fiber core region and other cavity space including an inner nested glass tube cavity 5 and an outer nested glass tube cavity 4 are filled with a gas. The gas is argon, nitrogen, helium, air or a mixture of multiple gases. Specifically, relevant parameters of the present embodiment are as follows: a diameter D of the fiber core is 32 µm; an outer diameter d1 of the outer nested glass tube is 31.6 µm; an outer diameter d2 of the inner nested glass tube is 14.5 µm, a ratio of which to the outer diameter of the outer nested glass tube is 0.46; and an inner diameter of the outer cladding (a diameter of a cavity of the outer cladding) is 95 µm. In the present embodiment, respective nested glass tubes have a wall thickness of 1.1 µm. When the wall thickness of respective nested glass tubes is about 0.95 µm, a second resonant operating band is extended to 1310 nm. When a first anti-resonant window is used as a communication operating band, respective nested glass tubes have a wall thickness of 0.5 µm. It should be noted that a leakage loss of a fundamental mode of the hollow-core anti-resonant optical fiber increases as the ratio of the outer diameter of the outer nested glass tube to the outer diameter of the inner nested glass tube decreases. However, a leakage loss of the LP11 mode does not increase all the time as the ratio decreases, but decreases after reaching a peak value which corresponds to a point where the resonance between the LP11 mode and the cladding mode is strongest. Therefore, the enhancement to the loss of the LP11 mode achieved by adjusting the ratio is limited. The present disclosure has a rational and fabricable shape of nested structural elements, an optimized combination of nesting dimensions, and a deflection of the inner nested glass tube, which collectively produce the following technical effects: significantly enhancing the leakage loss of the LP11 mode, having little impact on the performance of the fundamental mode, and finally effectively improving the single-mode performance of the optical fiber. As shown in Fig. 4, when the ratio of the outer diameter of the outer nested glass tube to the outer diameter of the inner nested glass tube is 0.46 and a deflection angle is 35°, the loss of the LP11 mode is greater than 11 dB/m.

A second embodiment of the present disclosure is as shown in Fig. 3, and differs from the first embodiment in the following aspect. 2 inner nested glass tubes are deflected to one side relative to the outer nested glass tube, and other 3 inner nested glass tubes are deflected to the other side. Other structures are the same as the structures in the first embodiment.

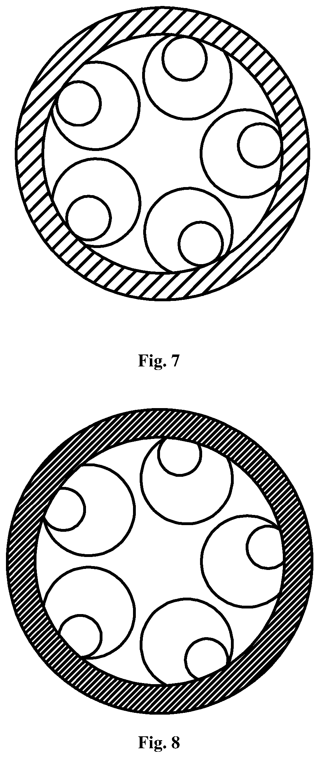

A third embodiment of the present disclosure is as shown in Fig. 7, and differs from the first embodiment in the following aspects. The outer nested glass tube is a circular-arc nested glass tube, a circumference angle of the circular-arc being 280°, and the outer circular-arc nested glass tube intersects with the inner wall of the outer cladding. The inner nested glass tube is a circular nested glass tube, and the circular inner nested glass tube is tangent to the inner wall of the outer cladding. A deflection angle is formed between a connection line L2 of a curvature center (the circle center) of the inner nested glass tube and a curvature center (the circle center) of the outer nested glass tube and an extension line L1 of a line connecting the curvature center of the outer nested glass tube and a geometric center of the fiber core, and the deflection angle is 35°. Deflection directions of all inner nested glass tubes are consistent. Other structures are the same as the structures in the first embodiment.

A fourth embodiment of the present disclosure is as shown in Fig. 8, and differs from the first embodiment in the following aspects. The inner nested glass tube and the outer nested glass tube are both circular-arc nested glass tubes. The circular-arc inner nested glass tube and the circular-arc outer nested glass tube both have a circumference angle of 280°, and respective inner circular-arc nested glass tubes and respective outer circular-arc nested glass tubes intersect with the inner wall of the outer cladding. A deflection angle is formed between a connection line L2 of a curvature center (the circle center) of the inner nested glass tube and a curvature center (the circle center) of the outer nested glass tube and an extension line L1 of a line connecting the curvature center of the outer nested glass tube and a geometric center of the fiber core, and the deflection angle is 35°. Deflection directions of all inner nested glass tubes are consistent. Other structures are the same as the structures in the first embodiment.

## Claims

1. A hollow-core anti-resonant optical fiber with high single-mode performance and low loss, comprising:
an outer cladding; and
an inner cladding which is formed by nested structural elements arranged circumferentially along an inner wall of the outer cladding and connected to the inner wall of the outer cladding and wraps a central cavity to form a fiber core, wherein the nested structural element includes 2 layers of nested glass tubes having different radii including an outer nested glass tube and an inner nested glass tube, and at least one inner nested glass tube is deflected to one side relative to the outer nested glass tube in which the inner nested glass tube is located with a deflection angle of 5° to 55°.

2. The hollow-core anti-resonant optical fiber with high single-mode performance and low loss according to claim 1, wherein the inner nested glass tube is deflected to one side relative to the outer nested glass tube such that a deflection angle is formed between a connection line L2 of a curvature center of the inner nested glass tube and a curvature center of the outer nested glass tube and an extension line L1 of a line connecting the curvature center of the outer nested glass tube and a geometric center of the fiber core.

3. The hollow-core anti-resonant optical fiber with high single-mode performance and low loss according to claim 1 or claim 2, wherein the inner cladding includes 4 to 6 nested structural elements.

4. The hollow-core anti-resonant optical fiber with high single-mode performance and low loss according to claim 3, wherein the nested structural elements are arranged at an interval circumferentially and uniformly along the inner wall of the outer cladding.

5. The hollow-core anti-resonant optical fiber with high single-mode performance and low loss according to claim 3, wherein the outer cladding and the inner wall are both circular.

6. The hollow-core anti-resonant optical fiber with high single-mode performance and low loss according to claim 1 or claim 2, wherein the nested glass tubes include circular nested glass tubes having different radii, wherein respective circular nested glass tubes are tangent, and the outer nested glass tube is tangent to an inner cavity wall of the outer cladding.

7. The hollow-core anti-resonant optical fiber with high single-mode performance and low loss according to claim 1 or claim 2, wherein the nested glass tubes include circular-arc nested glass tubes having different radii and circular nested glass tubes having different radii, wherein respective circular-arc nested glass tubes intersect with an inner wall of the outer cladding, or respective circular nested glass tubes are tangent to the inner wall of the outer cladding.

8. The hollow-core anti-resonant optical fiber with high single-mode performance and low loss according to claim 1 or claim 2, wherein the nested glass tubes include circular-arc nested glass tubes having different radii, wherein respective circular-arc nested glass tubes intersect with an inner wall of the outer cladding.

9. The hollow-core anti-resonant optical fiber with high single-mode performance and low loss according to claim 1 or claim 2, wherein multiple inner nested glass tubes or all inner nested glass tubes are deflected to the same side relative to the outer nested glass tubes, and deflection angles are the same or substantially the same.

10. The hollow-core anti-resonant optical fiber with high single-mode performance and low loss according to claim 1 or claim 2, wherein some of the inner nested glass tubes are deflected to one side, and some of the inner nested glass tubes are deflected to the other side.

11. The hollow-core anti-resonant optical fiber with high single-mode performance and low loss according to claim 1 or claim 2, wherein the outer nested glass tubes are circular-arc nested glass tubes, and the inner nested glass tubes are circular nested glass tubes or circular-arc nested glass tubes.

12. The hollow-core anti-resonant optical fiber with high single-mode performance and low loss according to claim 1 or claim 2, wherein the deflection angle is from 15° to 45°.

13. The hollow-core anti-resonant optical fiber with high single-mode performance and low loss according to claim 1 or claim 2, wherein the deflection angle is from 25° to 40°.

14. The hollow-core anti-resonant optical fiber with high single-mode performance and low loss according to claim 1 or claim 2 or claim 3, wherein the deflection angle is from 30° to 40°.

15. The hollow-core anti-resonant optical fiber with high single-mode performance and low loss according to claim 1 or claim 2, wherein a base material of the outer cladding and a base material of the nested structural element are both pure silica glass.

16. The hollow-core anti-resonant optical fiber with high single-mode performance and low loss according to claim 1 or claim 2, wherein a wall thickness of the inner nested glass tube and a wall thickness of the outer nested glass tube are from 0.3 µm to 1.5 µm.

17. The hollow-core anti-resonant optical fiber with high single-mode performance and low loss according to claim 1 or claim 2, wherein a ratio of an outer diameter of the outer nested glass tube to an outer diameter of the inner nested glass tube is 1:0.35 to 0.6.

18. The hollow-core anti-resonant optical fiber with high single-mode performance and low loss according to claim 1 or claim 2, wherein a fiber core region and other cavity regions in the outer cladding are filled with a gas.

19. The hollow-core anti-resonant optical fiber with high single-mode performance and low loss according to claim 18, wherein the gas is argon, nitrogen, helium, air or a mixture of multiple gases.

20. The hollow-core anti-resonant optical fiber with high single-mode performance and low loss according to claim 1 or claim 2, wherein a loss of a fundamental mode of the optical fiber is less than 0.5 dB/km.

21. The hollow-core anti-resonant optical fiber with high single-mode performance and low loss according to claim 1 or claim 2, wherein a loss of a higher-order mode of the optical fiber is greater than 6 dB/m.
